# EUROPÄISCHE PATENTSCHRIFT

(11) **EP 4 121 682 B1**
(45) Veröffentlichungstag und Bekanntmachung des Hinweises auf die Patenterteilung: **26.02.2025**
(21) Anmeldenummer: 21714135.7
(22) Anmeldetag: 19.03.2021
(51) Int. Cl.: F16L 55/04, F15B 21/00, F16L 55/053, F17D 1/20

(54) **VORRICHTUNG ZUR BEEINFLUSSUNG, INSBESONDERE REDUKTION, VON SCHWINGUNGEN IN EINEM FLUIDSYSTEM UND VERFAHREN ZUR BEEINFLUSSUNG, INSBESONDERE REDUKTION, VON SCHWINGUNGEN IN EINEM FLUIDSYSTEM**
DEVICE FOR INFLUENCING, IN PARTICULAR REDUCING, VIBRATIONS IN A FLUID SYSTEM, AND METHOD FOR INFLUENCING, IN PARTICULAR REDUCING, VIBRATIONS IN A FLUID SYSTEM
DISPOSITIF ET PROCÉDÉ PERMETTANT D'AGIR SUR, NOTAMMENT DE RÉDUIRE DES VIBRATIONS SE PRODUISANT DANS UN SYSTÈME FLUIDIQUE

(30) Priorität: 20.03.2020 DE 102020203660
(43) Veröffentlichungstag der Anmeldung: 25.01.2023
(73) Patentinhaber: Fraunhofer-Gesellschaft zur Förderung der angewandten Forschung e.V., 80686 München (DE)
(72) Erfinder: HANSMANN, Jan, 64289 Darmstadt (DE); RIESS, Sebastian, 64289 Darmstadt (DE); KAAL, William, 64289 Darmstadt (DE); MILLITZER, Jonathan, 64289 Darmstadt (DE); TAMM, Christoph, 64289 Darmstadt (DE)
(74) Vertreter: Pfenning, Meinig & Partner mbB
(86) Internationale Anmeldenummer: PCT/EP2021/057152
(87) Internationale Veröffentlichungsnummer: WO 2021/186069

(56) Entgegenhaltungen:
- EP-A1- 0 679 832
- EP-A2- 2 821 262
- WO-A1-2008/086777
- DE-A1- 1 960 369
- DE-A1- 10 316 946
- DE-A1- 102015 013 281
- JP-A- H 039 194

## Beschreibung

Die vorliegende Anmeldung liegt auf dem technischen Gebiet der Beeinflussung, insbesondere Reduktion, von Schwingungen in Fluidsystemen, insbesondere hydraulischen Systemen. Insbesondere betrifft die vorliegende Anmeldung eine Vorrichtung zur Beeinflussung, insbesondere Reduktion, von Schwingungen in einem Fluidsystem, insbesondere hydraulischen System, umfassend ein Trennmittel, das eine Seite zum Begrenzen einer fluidführenden Kavität des Fluidsystems aufweist. Des Weiteren betrifft die Anmeldung ein Verfahren zur Beeinflussung, insbesondere Reduktion, von Schwingungen in einem Fluidsystem.

Fluide (Gase und Flüssigkeiten) werden in vielen technischen Systemen in Rohren, Leitungen, Schläuchen oder anderen Querschnitten geführt. Die Gründe sind vielfältig und von dem jeweiligen technischen System und dessen Anwendung abhängig. In vielen Anwendungen kommt es zu unerwünschten Schwingungen, d.h. Druckschwankungen, die durch das Fluid übertragen werden. In einigen bekannten hydraulischen Systemen wird das eingesetzte Fluid, z.B. Wasser oder Öl, zur Übertragung von Signalen, Kräften oder Energie genutzt. Hydraulische Systeme kommen beispielsweise in Maschinen und Anlagen (Stationär-Hydraulik) oder in mobilen Maschinen und Fahrzeugen (Mobilhydraulik) zum Einsatz. In der Regel ist ein möglichst geringer Energiebedarf zum Betrieb des hydraulischen Systems wünschenswert, ebenso sind möglichst geringe Schwingungen und Schallabstrahlungen wünschenswert. Hydraulische Systeme umfassen in der Regel unterschiedliche Komponenten, beispielsweise Kolben, Motoren, Ventile, Speicher und Pumpen. Diese Komponenten sind in der Regel durch Schläuche oder Leitungen miteinander verbunden.

Gegenüber dem Fluid können die Komponenten des hydraulischen Systems eine gewisse Nachgiebigkeit aufweisen, woraus sich in einigen Systemen eine sogenannte Blähsteifigkeit ergibt. Eine möglichst hohe Blähsteifigkeit, d.h. eine geringe Nachgiebigkeit der Komponenten gegenüber dem Fluid, ist für den Wirkungsgrad und die Dynamik, insbesondere für das Ansprechverhalten bzw. die Reaktionsgeschwindigkeit, wünschenswert. Die verwendeten Fluide werden in erster Näherung oft als nicht kompressibel betrachtet, praktisch besitzen diese aber eine Nachgiebigkeit, welche durch die Kompressibilität (beschrieben durch den Kompressionsmodul) der Flüssigkeit beschrieben werden kann. Durch die Blähsteifigkeit, die Nachgiebigkeit des Fluides, sowie die bewegten Massen (des Fluids oder von bewegten Masse von Komponenten) ergibt sich ein schwingfähiges System mit verschiedenen Resonanzen. Dieses schwingfähige System wird beispielsweise durch Pumpen oder externe Einflüsse zum Schwingen angeregt. Diese Schwingungen haben in der Regel negative Auswirkungen zur Folge, beispielsweise eine kürzere Haltbarkeit des Systems, unerwünschte Beeinflussungen der Funktion des Systems, Geräusche und Lärm, Schwingungseinleitung in die Umgebung. Insbesondere kann durch Druckspitzen eine Überdimensionierung des Systems notwendig werden. Beispielsweise regen Pumpen das System typischerweise mit einer Frequenz an, die proportional zu deren Drehzahl bzw. einem Vielfachen davon ist. Diese Anregungen sind in der Regel vorwiegend harmonisch. Durch externe Einflüsse kann es auch zu breitbandigen oder impulsartigen Anregungen kommen.

Es gibt im Stand der Technik verschiedene Lösungen, durch die die oben geschilderten Schwingungsprobleme von hydraulischen Systemen reduziert werden. Beispielsweise können Membran-, Kolben oder Blasenspeicher zur Reduktion der Schwingungen angewendet werden. Diese sind in der Regel auf feste Frequenzen abgestimmt. Es wird ein zusätzliches Volumen für das jeweilige Fluid angekoppelt. In diesem Volumen liegt das Fluid an einer Membran, einem Kolben oder einer Blase an. Diese(r) wiederum stützt sich in der Regel an einem Gasvolumen ab, um eine gewisse Nachgiebigkeit sicherzustellen. Hierdurch können Druck- bzw. Volumenschwankungen des hydraulischen Systems reduziert werden. Nachteiligerweise benötigen derartige Lösungen in der Regel vergleichsweise viel Bauraum. Es kann in anderen Lösungen vorgesehen sein, dass nachgiebige Schläuchen verwendet werden, durch die sich eine geringe Blähsteifigkeit ergibt und Druckspitzen abgemildert werden. Dies kann aber eine geringere Energieeffizienz sowie eine reduzierte Haltbarkeit der Schläuche zur Folge haben. In weiteren Lösungen werden so genannte Side-Branch- bzw. Lambda-Viertel-Resonatoren verwendet, die eine zusätzliche Leitung mit definierter Länge umfassen, die an einem Ende verschlossen ist. Da die Schallgeschwindigkeit in einem hydraulischen Fluid aber vom jeweiligen Druck abhängig, kann eine optimale Abstimmung von derartigen Resonatoren insbesondere dann schwierig sein, wenn sich der quasistatische Betriebsdruck eines hydraulischen Systems im Betrieb bzw. für verschiedene Betriebszustände ändert. In weiteren Lösungen werden Helmholtz-Resonatoren (analog zu Schwingungstilgern) verwendet. Stand der Technik verwandter Art beschreiben beispielsweise die Druckschriften WO 2012/163318 A1 und US 6,109,304 A. Hierbei können insbesondere adaptive bzw. einstellbare Helmholtz-Resonatoren (analog zu einstellbaren Schwingungstilgern) verwendet werden. Bei der Verwendung von Zylindern, insbesondere als Resonatoren, kann jedoch die hinreichende Abdichtung Schwierigkeiten bereiten. Außerdem kann eine mit der Verstellung der Wirkfrequenz einhergehende Volumenänderung problematisch sein (Druckvariationen im Gesamtsystem, Verstellgeschwindigkeit limitiert, um Beschädigungen und unerwünschte Einwirkungen auf das hydraulische System zu vermeiden). Zudem muss die Kraft zur Verstellung in der Regel gegen den hydraulischen Druck arbeiten, was vergleichsweise große Aktorkräfte notwendig macht. Bei derartigen Systemen sind typischerweise vergleichsweise hohe Stellkräfte und große Bauräume vonnöten. Die Druckschrift EP 0 679 832 A1 beschreibt eine in einem mit einer Leitung verbundenen Ausgleichsvolumen vorgesehene verschiebliche Wandung, um in der Leitung Druckpulsationen zu reduzieren.

Vor dem Hintergrund der oben genannten Aspekte ist es eine Aufgabe der vorliegenden Anmeldung, eine verbesserte Vorrichtung zur Beeinflussung, insbesondere Reduktion, von Schwingungen in einem Fluidsystem, insbesondere hydraulischen System, vorzuschlagen, welche die beschriebenen Nachteile des Standes der Technik überwindet. Insbesondere ist es eine Aufgabe, eine Vorrichtung vorzuschlagen, die eine schnelle, zuverlässige und vergleichsweise energiearme Beeinflussung, insbesondere Reduktion, von Schwingungen ermöglicht. Außerdem ist es eine Aufgabe der vorliegenden Anmeldung, ein entsprechend vorteilhaftes Verfahren zur Beeinflussung, insbesondere Reduktion, von Schwingungen in einem Fluidsystem vorzuschlagen.

Diese Aufgaben werden gelöst durch eine Vorrichtung mit den Merkmalen des Anspruchs 1 sowie durch ein Verfahren mit den Merkmalen eines weiteren Anspruchs. Vorteilhafte Weiterbildungen ergeben sich mit den Merkmalen der abhängigen Ansprüche und der Ausführungsbeispiele.

Die vorgeschlagene Vorrichtung zur Beeinflussung, insbesondere Reduktion, von Schwingungen in einem Fluidsystem, insbesondere hydraulischen System, umfasst ein Trennmittel, das eine Seite zum Begrenzen einer fluidführenden Kavität des Fluidsystems aufweist. Die Vorrichtung umfasst außerdem eine Schwingungsbeeinflussungseinheit, insbesondere Schwingungsreduktionseinheit, die eingerichtet ist, eine Steifigkeit des Trennmittels mechanisch derart einzustellen, dass Schwingungen in dem Fluidsystem beeinflusst, insbesondere reduziert, werden. Die Schwingungsbeeinflussungseinheit ist in der Regel eine Einheit zur Beeinflussung der dynamischen Eigenschaften. In der Regel hat das Trennmittel eine eigene Steifigkeit (z.B. gegenüber einem Verbiegen/Verformen). Es kann daher vorgesehen sein, dass die Schwingungsbeeinflussungseinheit eine resultierende, gemeinsame Steifigkeit des Trennmittels und der Schwingungsbeeinflussungseinheit zur Verfügung stellt. In Ausführungsbeispielen, in denen andere Elemente als das Trennmittel auch einen Teil der Trennfunktion übernehmen, ist es nicht notwendig, aber möglich, dass das Trennmittel einen Großteil der Trennfunktion übernimmt.

Aus der Masse des Fluids in der Vorrichtung in Kombination mit dem Trennmittel und der Schwingungsbeeinflussungseinheit ergibt sich ein schwingfähiges System, welches durch eine Abstimmfrequenz charakterisiert werden kann. Durch das Einstellen der Steifigkeit mittels Schwingungsbeeinflussungseinheit verändert sich diese Abstimmfrequenz. Somit sind durch die vorgeschlagene Vorrichtung insbesondere harmonische, frequenzvariable Schwingungen, die bspw. durch Pumpen erzeugt werden, zuverlässig reduzierbar. Dies gilt insbesondere in dem Fall von drehzahlvariablen Pumpen, in dem die Abstimmfrequenz mit der zu reduzierenden Anregungsfrequenz mitgeführt wird. Zudem können Schwingungen des Fluidsystems in einer seiner Eigenfrequenzen reduziert werden. Besonders vorteilhaft ist dieses bei Systemen, in denen sich diese Eigenfrequenz, beispielsweise durch anschließen weiterer Systeme, verändert und die Abstimmfrequenz der Vorrichtung entsprechend mitgeführt wird.

Bei der vorgeschlagenen Vorrichtung wird die Steifigkeit mechanisch eingestellt, beispielsweise über ein Festkörper-Federelement. Somit ist gemäß der vorgeschlagenen Vorrichtung zur Änderung der Abstimmfrequenz eine gasförmige Komponente, z.B. eine Gasfeder, die die Abstimmfrequenz durch Änderung des Drucks verändert, nicht zwingend vonnöten. Außerdem sind vergleichbare fluidische Komponenten zur Einstellung der Steifigkeit ebenfalls nicht zwingend vonnöten, wie z.B. eine Fluidsäule, deren Volumen zur Veränderung der Abstimmfrequenz geändert wird, vgl. einen adaptiven Helmholtz-Resonatoren gemäß Stand der Technik. Insbesondere gegenüber den bekannten adaptiven Helmholtz-Resonatoren weist die vorgeschlagene Vorrichtung den Vorteil auf, dass sich das Fluidvolumen zum Einstellen der Abstimmfrequenz nicht zwangsläufig verändert. Entsprechend sind in dem hydraulischen Gesamtsystem keine zusätzlichen Ausgleichsmaßnahmen vorzusehen. Außerdem ist mit der vorgeschlagenen Vorrichtung eine schnelle Verstellung möglich, da die Vorrichtung bei der Verstellung keine relevanten Druckänderungen in das hydraulische System einbringt. Zudem muss in Ausführungen, in denen ein Ausgleich des statischen Druckes stattfindet, für die Verstellung der Eigenfrequenz bzw. Abstimmfrequenz nicht gegen den Druck des hydraulischen Systems gearbeitet werden. Hierdurch wird es möglich, zum Einstellen der Abstimmfrequenz eine Aktorik oder manuelle Betätigungseinrichtung zu verwenden, die sich durch einen geringen Platzbedarf auszeichnet, beispielsweise einen vergleichsweise klein dimensionierten, insbesondere mittels Getriebe übersetzten, Elektromotor. Neben dem Vorteil des geringen Bauraums ergibt sich für die vorgeschlagene Vorrichtung, dass der realisierbare Frequenzbereich nicht wie bei konventionellen Helmholtz-Resonatoren dadurch begrenzt ist, dass sich bei einer bestimmten Länge der Resonator-Kammer stehende Wellen innerhalb der Kammer bilden.

Es kann bei der vorgeschlagenen Vorrichtung somit vorgesehen sein, dass die Steifigkeit des Trennmittels durch die Schwingungsbeeinflussungseinheit verstellbar ist. Die Vorrichtung gewährleistet auf diese Weise eine mechanische Einstellbarkeit und Verstellbarkeit der Steifigkeit des Trennmittels durch die Schwingungsbeeinflussungseinheit. Durch die Schwingungsbeeinflussungseinheit kann die Steifigkeit des Trennmittels somit auch noch nach der fertigen Montage der Vorrichtung auf mechanische Weise verstellt werden kann. Die Schwingungsbeeinflussungseinheit weist in der Regel ein mechanisches Element auf. Die Steifigkeit wird dann typischerweise durch das mechanische Element zur Verfügung gestellt. Somit kann eine Beeinflussung der Schwingungen in dem Fluidsystem durch mechanische Verstellung der Steifigkeit erfolgen. Die vorgeschlagene Vorrichtung ist somit vorteilhaft gegenüber bekannten Vorrichtungen, bei denen eine Federanordnung vorgesehen, jedoch fest verbaut und nicht verstellbar, d.h. einstellbar, ausgeführt ist. Bei derartigen bekannten Vorrichtungen gewährleistet die Federanordnung, nachdem sie erst einmal ausgewählt und verbaut worden ist, keine Verstellung einer Steifigkeit mehr. Beispielhaft sei in diesem Zusammenhang auf die in Druckschrift DE 10 2015 013 281 A1 gezeigte Dämpfungsvorrichtung verwiesen.

Die vorliegende Anmeldung betrifft außerdem ein entsprechend vorteilhaftes Verfahren zur Beeinflussung, insbesondere Reduktion, von Schwingungen in einem Fluidsystem, bei dem eine wie oben oder unten beschriebene Vorrichtung bereitgestellt wird. Anschließend wird die Steifigkeit des Trennmittels durch die Schwingungsbeeinflussungseinheit derart eingestellt, dass Schwingungen in dem Fluidsystem reduziert werden. Unter einer Reduktion der Schwingungen im Sinne dieser Anmeldung ist auch das vollständige Abdämpfen dieser Schwingungen zu verstehen, sodass keine Schwingungen mehr auftreten. Die vorgeschlagene Vorrichtung kann allgemein zur Beeinflussung von Schwingungen bzw. zur Beeinflussung des dynamischen Verhaltens (Schwingverhaltens) des Fluidsystems hydraulischen Systems genutzt werden.

In typischen Ausführungsbeispielen umfasst die Schwingungsbeeinflussungseinheit ein Festkörper-Federelement. Das Festkörper-Federelement kann beispielsweise einen Teil des Trennmittels ausmachen oder mit dem Trennmittel verbunden sein oder mit diesem in Berührung stehen. Das Festkörper-Federelement kann beispielsweise aus Metall, Kunststoff und/oder Holz hergestellt sein. Das Festkörper-Federelement kann faserverstärkt sein. Das Festkörper-Federelement kann beispielsweise einseitig gelagert sein. In einigen Ausführungen ist das Festkörper-Federelement ein Biegebalken. Die Einstellbarkeit der Steifigkeit kann so realisiert werden, dass durch eine geeignete Schwingungsbeeinflussungseinheit eine freie Länge des Biegebalkens verändert wird.

Erfindungsgemäß ist die Schwingungsbeeinflussungseinheit derart eingerichtet um die Steifigkeit des Trennmittels durch eine Rotationsbewegung einzustellen. Auf diese Weise kann bei kompakter Bauform eine gute Betätigbarkeit der Schwingungsbeeinflussungseinheit sowohl bei manueller, als auch bei automatischer Betätigung gewährleistet werden.

In typischen Ausführungen umfasst die Schwingungsbeeinflussungseinheit zum mechanischen Einstellen der Steifigkeit mechanische Mittel, die mechanisch mit dem Trennmittel, in der Regel mit einer von der fluidführenden Kavität abgewandten Seite des Trennmittels oder in möglichen Ausführungen mit einer der fluidführenden Kavität zugewandten Seite des Trennmittels, gekoppelt oder koppelbar sind, sodass die Einstellung der Steifigkeit durch ein Bewegen der mechanischen Mittel erreicht wird.

In einigen Ausführungen weist die Schwingungsbeeinflussungseinheit Anbindungen auf. Die Anbindungen können zum Einstellen der Steifigkeit mit dem Trennmittel, insbesondere mit einer von der fluidführenden Kavität abgewandten Seite des Trennmittels, in Berührung stehen oder bringbar sein und/oder insbesondere starr, verbunden oder verbindbar sein. Beispielsweise durch ein Verschieben der Anbindungen relativ zum Trennmittel kann die Steifigkeit einstellbar sein. Zusätzlich oder alternativ kann die Steifigkeit durch ein Bewegen von mit den Anbindungen direkt oder mittelbar in Berührung stehenden Komponenten relativ zu den Anbindungen eingestellt werden.

In besonders bevorzugten Ausführungen weist die die Schwingungsbeeinflussungseinheit zumindest einen Federring und einen gegenüber dem Federring drehbar gelagerten Anbindungshalter auf. Der Federring kann in unterschiedlichen Ausführungen ein- oder mehrteilig ausgeführt sein. Der Federring kann über ortsfest mit dem Federring verbundene Anbindungen mit dem Trennmittel in Berührung stehen. Zudem kann der Anbindungshalter über ortsfest mit dem Anbindungshalter verbundene Anbindungen mit dem Federring in Berührung stehen. Auf diese Weise kann durch ein Verdrehen des Anbindungshalters relativ zum Federring auf einfache Weise eine präzise Einstellung der Steifigkeit erreicht werden. Der Anbindungshalter und/oder der Federring können als Teil einer platten- oder ringförmigen Komponente ausgebildet sein.

Durch die Verdrehung des Anbindungshalters relativ zu dem Federring werden Auflagebereiche, an denen die Anbindungen mit dem Trennmittel und/oder dem Anbindungshalter und/oder dem Federring in Berührung treten, verändert. Hierdurch kann sich eine quer zum Trennmittel wirksame Flächenelastizität verändern. Befinden sich die Anbindungen, die ortsfest mit dem Anbindungshalter verbunden sind, mit den Anbindungen, die ortsfest mit dem Federring verbunden sind, in Überlappung, so ist die wirksame Flächensteifigkeit des Trennmittels in der Regel am größten. Gelangen Auflagepunkte der Anbindungen durch relative Verdrehung des Federringes und des Anbindungshalters in Positionen mit jeweils gegenseitigen Abstandswinkeln, so reduziert sich die quer zum Trennmittel wirkende Flächensteifigkeit bis hin zu einem größtmöglichen Abstandswinkel, bei dem die Flächensteifigkeit minimiert ist. Zur Variation der Steifigkeit des Trennmittels bedarf es daher lediglich einer Verdrehung des Federrings relativ zum Anbindungshalter.

In einigen Ausführungen ist es vorgesehen, dass die Vorrichtung eingerichtet ist, ein Einstellen der Steifigkeit per Hand zu ermöglichen. Zusätzlich oder alternativ kann das Einstellen der Steifigkeit automatisch, beispielsweise elektromotorisch, betätigbar sein.

Typischerweise weist die Vorrichtung ein Gehäuse auf. In diesem Fall ist der Anbindungshalter in typischen Ausführungen gegenüber dem Gehäuse drehbar. In der Regel ist das Trennmittel hierbei gegen Verdrehung gegenüber dem Gehäuse gesichert. Beispielsweise kann die Vorrichtung eingerichtet sein, eine Drehung des Anbindungshalters per Hand zu ermöglichen. In diesem Fall sind Steifigkeit und Abstimmfrequenz somit besonders einfach durch einen Anwender einstellbar. Es kann zudem in einigen Ausführungen ein Motor vorgesehen sein. Der Motor kann eingerichtet sein, eine Drehung des Anbindungshalters gegenüber dem Gehäuse zu bewirken. In dieser Ausführung ist die Steifigkeit in besonders einfacher Weise automatisiert steuerbar.

In einigen Ausführungen ist eine Einrichtung zum Ausgleich der statischen Anteile des Druckes vorgesehen. Diese kann manuell oder automatisiert betätigbar sein. Diese Einrichtung kann, wie unten näher erläutert ist, beispielsweise eine Feder und/oder eine zweite Kavität aufweisen, die in Kontakt mit dem Trennmittel stehen. Im Falle einer zweiten Kavität kann der Ausgleich der statischen Anteile des Drucks durch eine Einstellung eines Gasdrucks in der zweiten Kavität erfolgen.

Es ist in einigen Ausführungen vorgesehen, dass das Trennmittel eine Membran oder eine Blase ist. Es ist jedoch in vielen Ausführungsbeispielen so, dass das Trennmittel ein Kolben ist. In typischen Ausführungen ist es zudem vorgesehen, dass das Trennmittel translatorisch beweglich gelagert ist. Die Vorrichtung kann gemäß diesem Beispiel den statischen Druck des Fluids ausgleichen und insbesondere zur Energiespeicherung durch Kompression des Gases in einer unten genauer beschriebenen zweiten Kavität eingerichtet sein. Es kann des Weiteren vorgesehen sein, dass die Vorrichtung eine Feder, insbesondere Schraubenfeder, aufweist. Die Feder kann derart auf eine von der fluidführenden Kavität abgewandte und/oder der fluidführenden Kavität zugewandte Seite des Trennmittels drücken, dass ein statischer Druck in der fluidführenden Kavität durch Verformen der Feder und Verschieben des Trennmittels ausgeglichen wird. In einigen Ausführungen ist es vorgesehen, dass eine Vorspannung der Feder einstellbar ist. Auf diese Weise ist eine Anpassung an unterschiedliche statische Druckanteile möglich.

Es ist in typischen Ausführungen vorgesehen, dass das Trennmittel die fluidführende Kavität von einer zweiten Kavität trennt. In den meisten Ausführungen ist die Schwingungsbeeinflussungseinheit zumindest teilweise in der zweiten Kavität angeordnet. Die zweite Kavität kann beispielsweise gasbefüllt, insbesondere luftbefüllt, sein. Typischerweise ist die zweite Kavität druckbeaufschlagbar. Es kann beispielsweise vorgesehen sein, dass die zweite Kavität gasdicht abgeschlossen oder abschließbar ist. Auf diese Weise ermöglicht die zweite Kavität eine zusätzliche Möglichkeit zur Einstellung der Abstimmfrequenz, indem ein Druck in der zweiten Kavität einstellbar ist. Zudem kann ein Gasvolumen in der zweiten Kavität als Luftfeder wirken. Beispielsweise kann die zweite Kavität mit einem Ventil verbunden sein. Das Ventil kann in fluider Kommunikation mit der zweiten Kavität stehen und kann Teil der Vorrichtung sein. Indem das Ventil vorgesehen ist, besteht eine zusätzliche Möglichkeit zur Einstellung des Dämpfungsgrads. Es kann vorgesehen sein, dass das Ventil regelbar ist, insbesondere über eine Einstellbarkeit eines Strömungsquerschnitts.

In einigen Ausführungen weist die Vorrichtung ein zweites Trennmittel auf. Das zweite Trennmittel kann translatorisch verschiebbar sein. Außerdem kann das zweite Trennmittel die zweite Kavität von einer dritten Kavität trennen. Es kann vorgesehen sein, dass die dritte Kavität in fluider Verbindung mit der fluidführenden Kavität steht, insbesondere über eine Verbindungsleitung. Die Verbindungsleitung kann einen geringeren Querschnitt aufweisen als die fluidführende Kavität und insbesondere als die zweite und/oder die dritte Kavität. Auf diese Weise kann ein automatischer Ausgleich des statischen Anteils des Drucks im Fluid erreicht werden. Es kann auch vorgesehen sein, dass die Verbindungsleitung ein Ventil, insbesondere ein Drosselventil, oder einen Absperrhahn aufweist.

In einigen Ausführungen umschließt die fluidführende Kavität eine Leitung des Fluidsystems, insbesondere konzentrisch. Beispielsweise kann es vorgesehen sein, dass die fluidführende Kavität die Leitung um einen Winkelbereich von zumindest 90 Grad, zumindest 180 Grad, zumindest 270 Grad oder vollständig umlaufend umgibt. Die fluidführende Kavität und/oder die Leitung können Teil der beanspruchten Vorrichtung sein. Diese Ausführung zeichnet sich durch eine hochintegrierte Bauweise aus und ist somit sehr platzsparend. Es ist in der Regel vorgesehen, dass die fluidführende Kavität und die Leitung über Öffnungen miteinander in fluider Kommunikation stehen. Öffnungsquerschnitte dieser Öffnungen können in einigen Ausführungen verstellbar sein. Das Trennmittel ist in dieser Ausführung in der Regel ringförmig.

Es ist in einigen Ausführungen vorgesehen, dass das Trennmittel einen translatorisch verschiebbaren ersten Trennmittelabschnitt aufweist. Zudem kann das Trennmittel einen translatorisch verschiebbaren zweiten Trennmittelabschnitt aufweisen. Der zweite Trennmittelabschnitt kann gegenüber dem ersten Trennmittelabschnitt translatorisch verschiebbar sein. Zudem kann eine Abdichtung zwischen dem ersten und zweiten Trennmittelabschnitt ausgebildet sein. Die Schwingungsbeeinflussungseinheit kann mit dem ersten Trennmittelabschnitt und mit dem zweiten Trennmittelabschnitt derart verbunden sein, dass die Schwingungsbeeinflussungseinheit zwischen dem ersten Trennmittelabschnitt und dem zweiten Trennmittelabschnitt wirkt und mit dem ersten Trennmittelabschnitt und dem zweiten Trennmittelabschnitt translatorisch verschiebbar ist. In der Regel sind hierbei der erste Trennmittelabschnitt, der zweite Trennmittelabschnitt und die Schwingungsbeeinflussungseinheit verschiebbar gegenüber dem Gehäuse der Vorrichtung, insbesondere translatorisch verschiebbar gelagert. Hierbei stützt sich die Schwingungsbeeinflussungseinheit in der Regel an dem ersten und dem zweiten beweglichen Trennmittelabschnitt ab, insbesondere ohne dass ein Abstützen der Schwingungsbeeinflussungseinheit am Gehäuse erforderlich ist, wodurch die Schwingungsbeeinflussungseinheit selbst oder Teile davon nicht durch statische Druckanteile ausgelenkt wird, sodass die Einstellung der Steifigkeit nicht durch die statischen Druckanteile beeinflusst wird. Somit kann die Schwingungsbeeinflussungseinheit zur Beeinflussung und insbesondere Reduktion der Schwingungen im Fluidsystem gezielt auf die dynamischen Druckschwankungen abgestimmt werden. Es kann des Weiteren vorgesehen sein, dass ein Dichtungsbereich zwischen Trennmittel und Gehäuse ein insbesondere erhöhtes, beispielsweise einstellbares, Losbrechmoment aufweist. In der Regel weist der Dichtungsbereich zwischen Trennmittel und Gehäuse gegenüber der Abdichtung zwischen den Trennmittelabschnitten eine erhöhte Reibung auf. Diese und/oder eine deutlich geringere Massenträgheit des ersten Trennmittelabschnitts gegenüber dem zweiten Trennmittelabschnitt sind in der Regel vorgesehen.

In einigen Ausführungen umfasst die Vorrichtung eine Steuereinheit. Die Steuereinheit kann zum Einstellen der Steifigkeit derart mit der Schwingungsbeeinflussungseinheit verbunden sein, dass die Steifigkeit durch die Steuereinheit einstellbar ist. Hierbei kann die Steuereinheit eingerichtet sein, die Steifigkeit anhand von Beschleunigungssensorsignalen und/oder Drucksensorsignalen und/oder einer Pumpendrehzahl und/oder anhand von virtuell berechneten Signalen und/oder Weggrößen und abgeleitete Größen, wie bspw. Beschleunigungen, einzustellen. Auf diese Weise eignet sich die Vorrichtung zur automatischen Schwingungsreduzierung durch eine automatische Einstellung der Abstimmfrequenz. Es kann vorgesehen sein, dass die Steuereinheit eingerichtet ist, ein Steuersignal an die Schwingungsbeeinflussungseinheit und insbesondere an eine Verstellaktorik derselben, insbesondere an den Motor, auszugeben. Die Abstimmfrequenz kann durch Einstellen der Steifigkeit von der Steuereinheit auf die Pumpendrehzahl und/oder ein Vielfaches davon eingestellt werden. Das Beschleunigungssensorsignal und/oder Drucksensorsignal wird in der Regel von einem direkt oder indirekt mit dem Fluid in Verbindung stehenden Sensor ausgegeben. Die Steuereinheit kann eingerichtet sein, das Beschleunigungssensorsignal und/oder Drucksensorsignal, insbesondere durch Fourier-Transformation, in den Frequenzraum zu überführen. Die Abstimmfrequenz kann durch Einstellen der Steifigkeit von der Steuereinheit auf dieses Frequenzsignal eingestellt werden. Es kann auch vorgesehen sein, dass die Steuereinheit eingerichtet ist, die Steifigkeit anhand von Signalen von zwei Beschleunigungs- oder Drucksensoren einzustellen. Die Sensoren können eingerichtet sein, die Beschleunigung oder den Druck an Orten des Fluidsystems zu messen, zwischen denen die fluidführende Kavität angeordnet ist. Die Signale dieser Sensoren können durch die Steuereinheit in den Frequenzraum überführt werden. Die Abstimmfrequenz kann anschließend durch Einstellen der Steifigkeit so eingestellt werden, dass eine Übertragung der zu reduzierenden Frequenzanteile zwischen den Sensoren reduziert werden.

Die Vorrichtung kann auch einen Kopplungssensor aufweisen. Der Kopplungssensor kann eingerichtet sein, eine Ankopplung einer weiteren Komponente an das Fluidsystem zu detektieren. Außerdem kann die Steuereinrichtung vorgesehen und eingerichtet sein, die Steifigkeit anhand eines Signals des Kopplungssensors einzustellen. Auf diese Weise können Eigenfrequenzänderungen des Fluidsystems, die aus der Ankopplung der weiteren Komponente resultieren, auf einfache und schnelle Weise bei der Beeinflussung bzw. Reduktion der Schwingungen berücksichtigt werden. In einem Verfahren zur Beeinflussung von Schwingungen in dem Fluidsystem kann das Einstellen der Steifigkeit des Trennmittels somit anhand des Signals des Kopplungssensors durchgeführt werden.

Die Vorrichtung kann auch eine, insbesondere mit dem Trennmittel verbundene, Aktorik aufweisen. Es kann vorgesehen sein, dass die Aktorik eingerichtet ist zum aktiven Einbringen von Kräften in das Fluid, insbesondere durch Bewegen, zum Beispiel Inschwingungversetzen, des Trennmittels. Durch die Aktorik können zusätzlich gezielt Schwingungen des Fluidsystems reduziert und/oder Signale übertragen werden. Es kann beispielsweise vorgesehen sein, dass die Aktorik eingerichtet ist, ein Schwingen des Trennmittels zu bewirken. In typischen Ausführungen umfasst die Aktorik einen Tauchspulenaktor und/oder einen Piezoaktor. In typischen Ausführungen ist die Aktorik mit der Steuereinheit verbunden und von dieser ansteuerbar.

Das Fluid ist bevorzugt weitestgehend nicht kompressibel und kann beispielsweise Hydraulikflüssigkeit, Öl oder Wasser sein. Grundsätzlich ist der Einsatz einiger Ausführungsbeispiele der Vorrichtung aber auch in Systemen mit einem kompressiblen Fluid, beispielsweise Luft oder Gas, möglich. Das Fluidsystem kann beispielsweise eine mobile oder eine stationäre Hydraulikanlage sein. Beispielsweise kann das Fluidsystem ein hydraulischer Antrieb oder eine Pumpe sein oder umfassen. Des Weiteren kann das Fluidsystem ein Wasserleitungssystem sein oder umfassen. Außerdem kann das Fluidsystem eine Kraftstoffeinspritzung, insbesondere von Motoren, sein oder umfassen. Ferner kann das Fluidsystem ein Saugrohr eines Verbrennungsmotors sein oder umfassen, wobei die Kavität an dem Saugrohr angeordnet sein kann. Außerdem kann das Fluidsystem eine Luftzuführung eines Turboladers sein oder umfassen, wobei die Kavität an der Luftzuführung angeordnet sein kann. Zudem kann das Fluidsystem ein Abgasstrang sein oder einen Abgasstrang umfassen, insbesondere zwischen einem Zylinder und einem Abgasturbolader, wobei die Kavität an dem Abgasstrang angeordnet sein kann.

Die vorliegende Anmeldung kann auch das Fluidsystem, insbesondere das hydraulische System, betreffen. Das Fluidsystem kann die oben oder unten beschriebene Vorrichtung umfassen. Zudem kann das Fluidsystem beispielsweise eine Pumpe und/oder einen Verbraucher, insbesondere einen hydraulischen Verbraucher, enthalten. Zusätzlich oder alternativ kann das Fluidsystem eine Leitung enthalten, die in einigen Ausführungen die Pumpe mit dem Verbraucher verbindet. Die fluidführende Kavität kann in fluider Verbindung mit der Leitung stehen. In einigen Ausführungen ist das Trennmittel an der Leitung angeordnet.

Oben oder unten in Bezug auf das die Vorrichtung zur Beeinflussung, insbesondere Reduktion, von Schwingungen in dem Fluidsystem oder das Fluidsystem genannte Merkmale sind entsprechend auf das Verfahren anwendbar und umgekehrt.

Ausführungsbeispiele werden nachfolgend anhand der Abbildungen beschrieben. Es zeigen
- Fign. 1(a) bis (d): mögliche Anordnungen einer Vorrichtung zur Reduktion von Schwingungen in einem Fluidsystem,
- Fig. 2: eine schematische Ansicht der Vorrichtung,
- Fig. 3: eine teils perspektivische Ansicht der Vorrichtung,
- Fig. 4: eine Querschnittsansicht der Vorrichtung,
- Fig. 5: eine perspektivische Ansicht einer Schwingungsreduktionseinheit,
- Fig. 6: eine Querschnittsansicht der Vorrichtung,
- Fign. 7(a) und (b): verschiedene schematische Ansichten einer Vorrichtung gemäß einem weiteren Ausführungsbeispiel,
- Fig. 8: eine Querschnittsansicht der Vorrichtung gemäß einem weiteren Ausführungsbeispiel,
- Fign. 9(a) bis (c): schematische Ansichten der Vorrichtung gemäß einem weiteren Ausführungsbeispiel,
- Fig. 10: eine schematische Querschnittsansicht der Vorrichtung gemäß einem weiteren Ausführungsbeispiel sowie
- Fign. 11 und 12: verschiedene Fluidsysteme mit der vorgeschlagenen Vorrichtung.

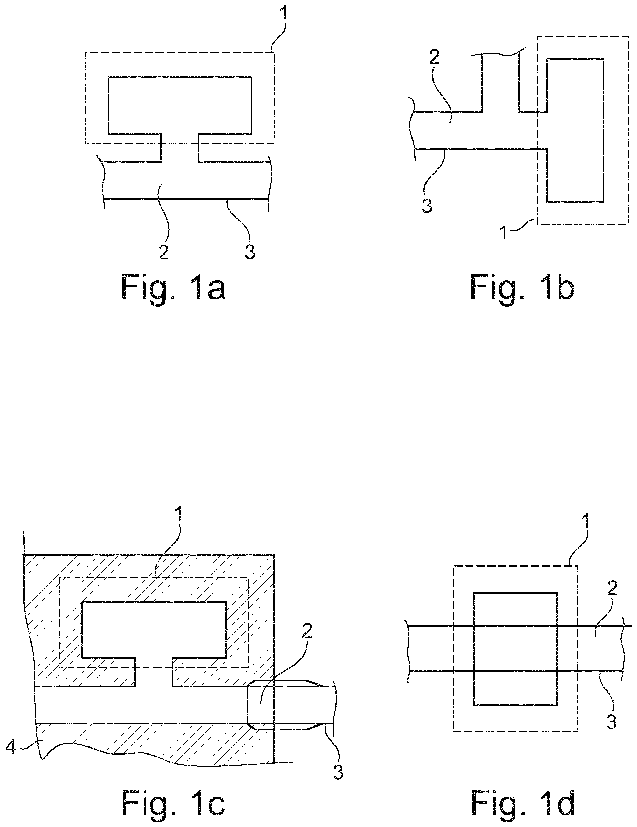

Figuren 1(a) bis (d) zeigen schematische Anordnungen einer Vorrichtung 1 zur Reduktion von Schwingungen in einem Fluidsystem, insbesondere hydraulischen System. Allgemein kann diese Vorrichtung 1 aber auch zur Beeinflussung von Schwingungen in dem Fluidsystem genutzt werden. Durch diese Vorrichtung 1 sind dynamische Eigenschaften des Fluidsystems anpassbar. Fig. 1(a) zeigt die Integration der Vorrichtung 1 an eine linearen Leitung 3 des hydraulischen Systems, die als Schlauch oder Kanal ausgeführt ist. Die Leitung 3 führt ein Fluid bzw. eine hydraulische Flüssigkeit 2, kann in anderen Ausführungen jedoch auch ein Gas führen. In Fig. 1(b) ist die Vorrichtung an einer Krümmung der Leitung 3 fluidisch angeschlossen. Wiederkehrende Merkmale sind in dieser und in den folgenden Abbildungen mit den gleichen Bezugszeichen versehen. In Fig. 1(c) ist schematisch eine Strukturintegration der Vorrichtung 1 in ein Gehäuse 4 einer anderen Komponente, beispielsweise das Gehäuse einer Pumpe (nicht dargestellt) oder eines Steuer- oder Ventilblockes. Figur 1(d) zeigt schematisch eine konzentrisch um die Leitung 3 geführte Ausführungsform der Vorrichtung 1, was unten genauer beschrieben wird. Diese konzentrische Anordnung ist auch innerhalb eines Gehäuses 4, bspw. innerhalb eines Pumpengehäuses, möglich.

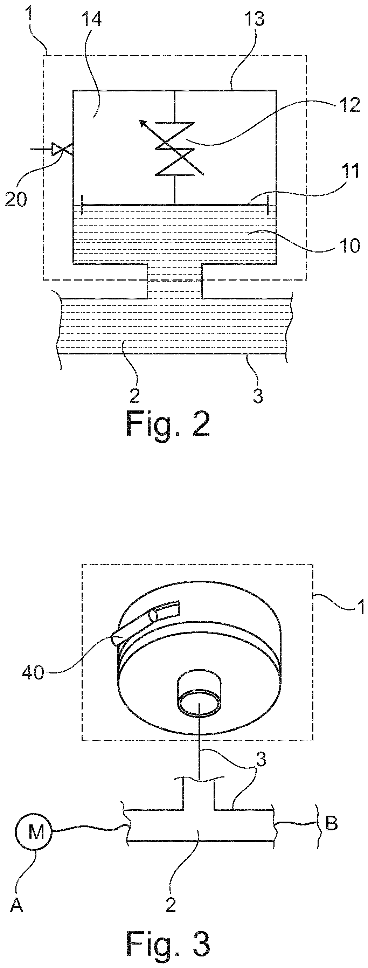

Figur 2 zeigt schematisch den Aufbau einer vorgeschlagenen Vorrichtung 1. Die Vorrichtung 1 umfasst ein Gehäuse 13. In diesem Gehäuse 13 befindet sich eine fluidführende Kavität 10, d.h. ein Volumen, welches mit dem Fluid 2 gefüllt werden kann. Die fluidführende Kavität 10 kann durch ein Trennmittel 11 (z.B. Kolben, Membran, Blase) von einer zweiten Kavität 14, d.h. einem weiteren Volumen, abgetrennt sein. In typischen Ausführungen ist das Volumen 14 gasdicht und kann über bspw. ein Ventil 20 druckbeaufschlagt werden. In den bisher beschriebenen Grundzügen ist die Vorrichtung vergleichbar mit einem aus dem Stand der Technik bekannten Kolben-, Membran- oder Blasenspeicher (auch "Akkumulator"). Die vorgeschlagene Vorrichtung 1 weist jedoch eine als Schwingungsreduktionseinheit 12 ausgeführte Schwingungsbeeinflussungseinheit, die an dem Trennmittel 11 angreift, d.h. eine einstellbare Steifigkeit, auf. Aus diesem Aufbau ergibt sich mit der (anteiligen) Masse des Fluides in der Vorrichtung 1 in Kombination mit der Schwingungsreduktionseinheit 12 bzw. einstellbaren Steifigkeit ein schwingfähiges System, welches durch seine Abstimmfrequenz charakterisiert werden kann. Durch Veränderung der Steifigkeit des Trennmittels mittels mechanischer Einstellung durch die Schwingungsreduktionseinheit verändert sich diese Abstimmfrequenz. Darüber hinaus kann die Abstimmfrequenz auch durch die gezielte Wahl oder Veränderung der Masse des Trennmittels 11 gezielt beeinflusst werden. In einigen Ausführungen weist die Vorrichtung 1 folgende Sensorik auf: Einen nicht dargestellten Drucksensor im Volumen 10, einen Weg- /Geschwindigkeits- oder Beschleunigungssensor auf dem Trennmittel 11 und/oder auf dem Gehäuse 13 und/oder Temperatursensor am Gehäuse 13 oder im Volumen 10.

Figur 3 zeigt eine teils schematische, teils perspektivische Ansicht der Vorrichtung 1 an einem - vereinfacht dargestellten - hydraulischen System, das eine Pumpe A, ein System aus mehreren Leitungen 3 und hydraulischen Verbrauchern B (bspw. Zylinder oder Aktoren) enthält. Erzeugt eine drehzahlvariable Pumpe A Druckpulsationen mit einer bestimmten, drehzahlabhängigen Frequenz, so kann die Vorrichtung 1 dazu genutzt werden, diese Schwingungen zu reduzieren. Die Vorrichtung 1 fungiert dann analog zu einem Schwingungstilger. Hierzu wird die Abstimmfrequenz der Vorrichtung 1 durch Anpassung der Schwingungsreduktionseinheit bzw. einstellbaren Steifigkeit 12 so angepasst, dass diese weitestgehend auf die zu tilgende Frequenz fällt. Wird die Abstimmfrequenz der Vorrichtung 1 mit der sich verändernden Drehzahl der Pumpe A mitgeführt, fungiert die Vorrichtung analog zu einem Neutralisator.

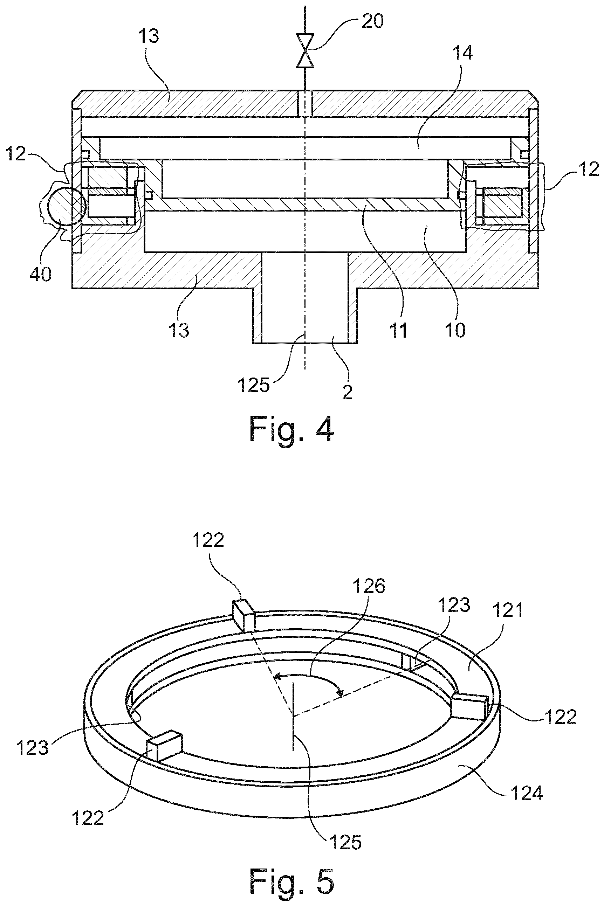

In Fig. 4 zeigt die in Fig. 3 schematisch gezeigte Vorrichtung 1 in einem Querschnitt. Das aus dem hydraulischen System über die Leitung 3 transportierte Fluid 2 füllt in der Vorrichtung die fluidführende Kavität 10 in dem Gehäuse 13. Die fluidführende Kavität 10 ist über einen das Trennmittel 11 in Form eines Kolbens von der zweiten Kavität bzw. dem zweiten Volumen 14 abgetrennt. Dieses zweite Volumen kann gasdicht sein und bspw. durch das Ventil 20 mit einem Gas gefüllt werden. Der Fülldruck in der zweiten Kavität 14 kann dazu genutzt werden, einen statischen Druckanteil im Fluid 2 auszugleichen. Bei der Wahl des hierfür notwendigen Gasdrucks für das Volumen 14 ist das Verhältnis der effektiv wirksamen Flächen des Kolbens 11 gegenüber den Volumina 14, 10 zu beachten. Wird das Ventil 20 mit einem weiteren Gasvolumen verbunden und ist dieses Ventil im Querschnitt einstellbar, so kann dieses Ventil auch zur Einstellung einer Dämpfung verwendet werden. Der Kolben 11 ist entlang der Hauptachse 125 der Vorrichtung 1 translatorisch beweglich gelagert. Im gezeigten Beispiel ist der Kolben 11 darüber hinaus gegen eine Verdrehung um diese Hauptachse 125 gesichert.

Darüber hinaus ist der Kolben 11 mit der Schwingungsreduktionseinheit 12, d.h. der Vorrichtung zur Realisierung einer einstellbaren Steifigkeit, verbunden. Eine mögliche Realisierung der Schwingungsreduktionseinheit 12 ist schematisch in Fig. 5 gezeigt. Die Schwingungsreduktionseinheit 12 weist einen Federring 121, beispielsweise aus Metall, Kunststoff oder faserverstärktem Material, und außerdem drei Anbindungen 122, die rotatorisch mit einer Teilung von beispielsweise 120° (oder beispielsweise 90° im Fall von vier Anbindungen je Seite) ortsfest am Kolben 11 befestigt sind, auf. Darüber hinaus sind die Anbindungen 122 ortsfest mit dem Federring 121 verbunden. Auf der gegenüberliegenden Seite des Federrings sind drei weitere Anbindungen 123 angeordnet, welche mit einer Teilung von 120° ortsfest mit einem Anbindungshalter 124 verbunden sind. Der Anbindungshalter 124 ist gegenüber dem Gehäuse 13 um die Hauptachse 125 drehbar gelagert. Hierdurch lässt sich zwischen den Anbindungen 122 der Oberseite und den Anbindungen 123 der Unterseite ein Winkel 126 einstellen. Dieser bestimmt die Steifigkeit des einstellbaren Federelements in Richtung der Hauptachse 125.

Wird die Außenfläche des Anbindungshalters 124 mit einer geeigneten Verzahnung (nicht dargestellt) versehen, kann diese in Kombination mit einer Schnecke 40 (siehe Fign. 3 und 4) dazu genutzt werden, den Anbindungshalter 124 zu verdrehen und somit die Steifigkeit sowie die damit verbundene Abstimmfrequenz der Vorrichtung 1 einzustellen. Eine manuelle Verstellung der Steifigkeit und somit manuelle Einstellung der Abstimmfrequenz, beispielsweise durch einmaliges, händisches Verdrehen der Vorrichtung 1 zur Steifigkeitseinstellung ist hierbei möglich.

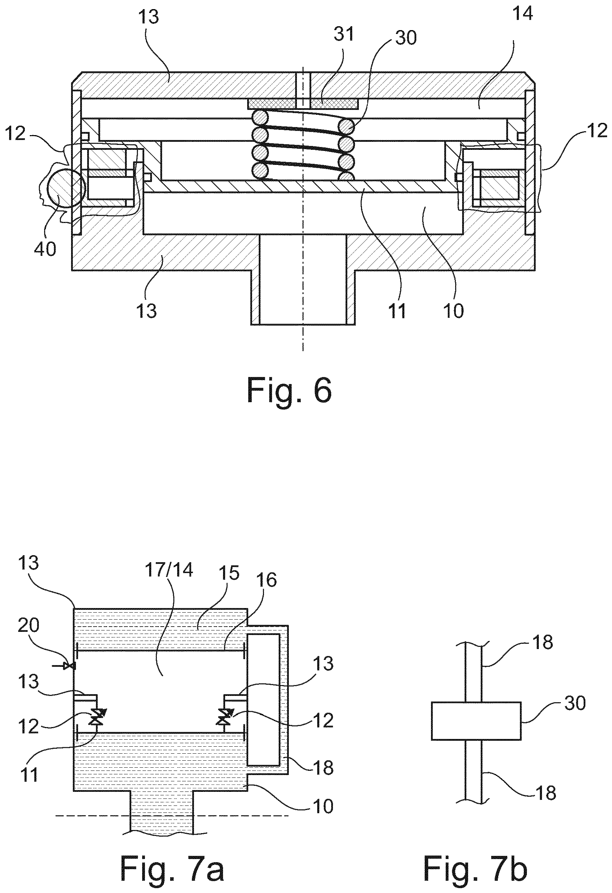

Figur 6 illustriert ein Ausführungsbeispiel, bei dem ein statischer Druckanteil des Fluides 2 in der fluidführenden Kavität 10 durch eine Feder 30, insbesondere Schraubenfeder, aufgenommen wird. In diesem Fall ist die zweite Kavität 14 nicht gasdicht ausgeführt. Des Weiteren kann eine an sich bekannte und hier nicht weiter detaillierte Einrichtung 31 integriert werden, welche es ermöglicht, eine Vorspannung auf die Schraubenfeder 30 einzustellen. Hierdurch wird eine Anpassung an unterschiedliche statische Druckanteile möglich. Ein hier nicht gezeigtes Ventil 20 zwischen dem Volumen 14 und der Umgebungsatmosphäre kann genutzt werden um den Dämpfungsgrad der Vorrichtung einzustellen, vgl. die obenstehenden Ausführungen zu Fig. 4.

Figuren 7(a) und (b) zeigen eine weitere Variante der oben beschriebenen Vorrichtung 1. Die fluidführende Kavität 10 bzw. das Fluidvolumen ist wie beschrieben über den Kolben 11 von der zweite Kavität 14 bzw. dem Gasvolumen getrennt, welches über ein Ventil 20 befüllt werden kann. Die Schwingungsreduktionseinheit 12 bzw. einstellbare Steifigkeit stützt sich darüber hinaus wie gehabt am Gehäuse 13 ab. In Reihe zum Gasvolumen 14 ist ein weiteres Trennmittel 16 bzw. ein weiterer Kolben angeordnet. Dieser trennt das Gasvolumen 14 von einer dritten Kavität 15 bzw. einem weiteren Fluidvolumen. Die Volumina 10, 15 sind über eine Verbindung 18 verbunden. Ziel dieser Verbindung 18 ist ein automatischer Ausgleich des statischen Anteils des Drucks im Fluid. Hierzu kann der Querschnitt der Verbindung entweder sehr gering ausgeführt werden, oder es kann eine weitere Maßnahme 30 in die Verbindung 18 integriert werden, siehe Fig. 7(b). Bei dieser Maßnahme 30 kann es sich bspw. um eine Drossel, ein Ventil oder einen Absperrhahn handeln. Letzterer kann beispielweise zu festgelegten oder zu durch eine Steuereinheit initiierten Zeitpunkten geöffnet werden, um einen Druckausgleich zwischen den Volumina 10, 15 vorzunehmen.

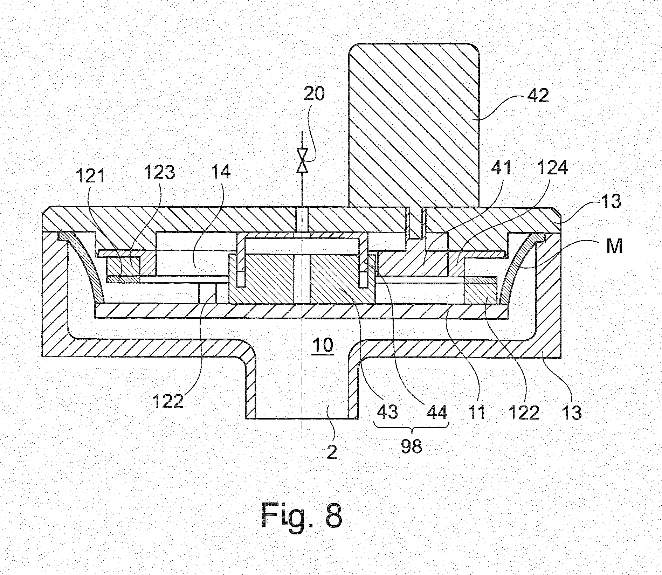

Figur 8 zeigt ein weiteres Ausführungsbeispiel der Vorrichtung 1, bei dem die fluidführende Kavität 10 bzw. das Fluidvolumen mittels einer Membran M und einem Trennmittel 11 in Form einer Platte 11 von der zweiten Kavität 14, d.h. vom Volumen 14, getrennt wird. Entsprechend der vorherigen Beispiele kann das Volumen 14 gasdicht sein und zum Ausgleich statischer Druckanteile im Fluid 2 und/oder in der Kammer 10 genutzt werden. Im gezeigten Beispiel wird zur Realisierung der einstellbaren Steifigkeit 12 wieder die in Fig. 5 gezeigte Schwingungsreduktionseinheit herangezogen. Die drei Anbindungen 122 sind um jeweils 120° rotiert an der Platte 11 ortsfest befestigt und mit dem Federring 121 verbunden. Dieser steht auf der gegenüberliegenden Seite mit den drei - um 120° rotierten und ortsfest mit dem Anbindungshalter 124 verbundenen - Anbindungen 123 in Verbindung. Der Anbindungshalter 124 ist gegenüber dem Gehäuse 13 so gelagert, dass dieser einen Freiheitsgrad hat. Der Anbindungshalter 124 lässt sich um die Hauptachse drehen. Ist der Anbindungshalter 124 auf der Innenseite mit einer Verzahnung versehen, so kann mit Hilfe eines Motors 42, der über eine Welle und ein weiteres Zahnrad 41 in die Innenverzahnung des Anbindungshalters greift, die Steifigkeit der Schwingungsreduktionseinheit 12 (dargestellt in Form der Einzelkomponenten 121, 122, 123 und 124) eingestellt werden. Des Weiteren ist eine Aktorik 98 in Form eines Tauchspulenaktors, umfassend eine Spule 44 und einen Magneten 43, in die Vorrichtung 1 integriert. Der Tauchspulenaktor ermöglicht es - mit Hilfe eines geeigneten Leistungsverstärkers, entsprechender Signalverarbeitung in einer Steuereinheit und Sensorik - aktiv Kräfte in das Fluid 2 einzubringen.

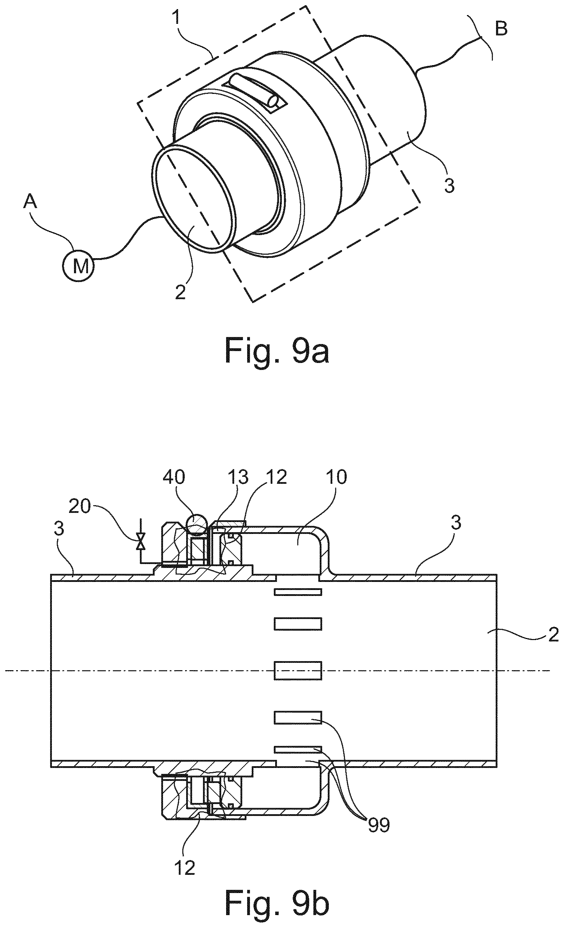

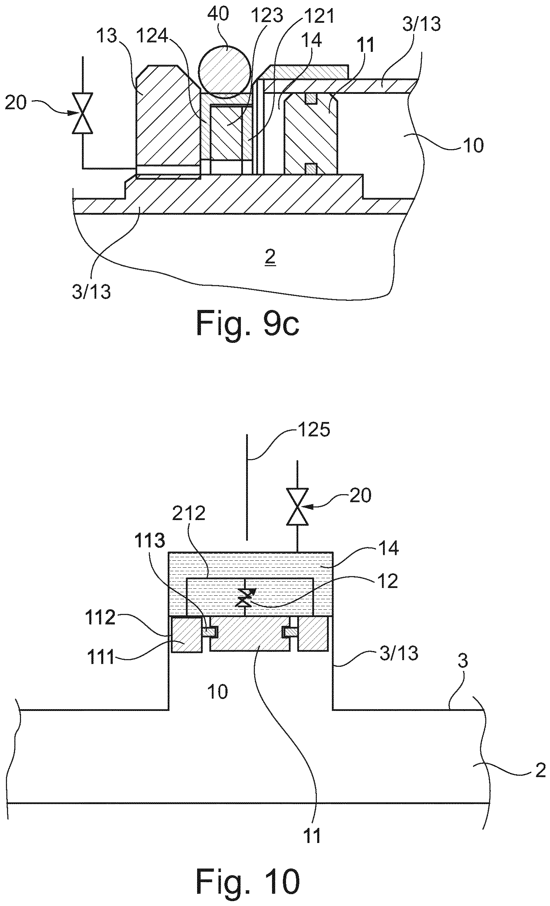

Figuren 9(a) bis (c) illustrieren schematisch eine weitere Ausführungsform der Vorrichtung 1, die insbesondere vorteilhaft sein kann, wenn enge Bauräume oder eine hochintegrierte Bauweise erwünscht bzw. erforderlich sind. Hierbei wird das Gehäuse 13, vorzugsweise konzentrisch, als Teil der Leitung 3 bzw. des Schlauchs ausgeführt. Das Fluid 2 kann somit durch die Vorrichtung 1 strömen. Die fluidführende Kavität 10 bzw. das Fluidvolumen 10 ist konzentrisch um die Leitung 3 angeordnet. Durch Öffnungen 99 in dieser Leitung steht das Volumen 10 mit der Leitung 3 in Verbindung. Diese Öffnungen können wie gezeigt rechteckig sein, können aber auch verschiedene andere Formen oder Querschnitte haben. Insbesondere können diese Querschnitte auch verstellbar sein, beispielsweise durch Schieber oder Blenden (nicht dargestellt). Das Trennmittel 11 bzw. der Kolben 11 trennt auch hier das Fluidvolumen 10 von der zweiten Kavität 14 bzw. dem weiteren Volumen 14 und stützt sich an der Schwingungsreduktionseinheit 12 bzw. einstellbaren Steifigkeit ab, welche sich wiederrum am Gehäuse 13 abstützt, das in dem gezeigten Ausführungsbeispiel als Bestandteil der Leitung 3 ausgeführt ist. Figur 9(c) zeigt einen Bereich der Ausführungsform in größerem Detail.

Das Fluidvolumen 10 wird durch den, ebenfalls konzentrisch zur Leitung angeordneten, Kolben 11 vom Volumen 14 getrennt. Dieses kann auch in dieser Ausführungsform optional gasdicht sein und in diesem Fall, z.B. über ein Ventil 20, mit Druck beaufschlagt werden um statische Druckanteile im Fluid 2 auszugleichen. Der Kolben stützt sich an der einstellbaren Steifigkeit 12 ab, welche auch hier exemplarisch gemäß Fig. 5 realisiert ist. Auch im hier gezeigten Beispiel kann über das schematisch angedeutete Schneckengetriebe, umfassend den kombinierten Anbindungshalter 124 mit dem Schneckenrad 124 und der Schnecke samt Antriebswelle 40 die notwendige Rotation des Anbindungshalters durchgeführt werden mittels derer die Steifigkeit eingestellt wird. Analog zu Fign. 7(a) und (b) ist der Aufbau aus Fign. 9(a) bis (c) auch mit einem zweiten Trennmittel 16 und einer zweiten Fluidkammer 15 denkbar, welche zum Druckausgleich durch eine Verbindung 18 mit dem Volumen 10 verbunden ist. Bei einem entsprechenden Aufbau kann diese Verbindung 18 zum Druckausgleich auch zwischen der Fluidkammer 15 und dem Fluid 2 in der Leitung 3 bzw. im Rohr, beispielsweise durch eine radiale Bohrung auf Höhe der Kammer 15, geschaffen werden.

Figur 10 zeigt schematisch ein weiteres Beispiel einer Ausführung der Vorrichtung 1. Das Gehäuse 13 der Vorrichtung 1 ist unmittelbar oder mittelbar (z.B. über Verschrauben) mit dem Rohr/der Leitung 3 verbunden. Die fluidführende Kavität 10 bzw. das Fluidvolumen 10 und die zweite Kavität 17 bzw. das Volumen 14 werden in dieser Ausführungsform durch zwei Trennmittelabschnitte 111 und 11 voneinander getrennt. Diese Trennmittelabschnitte 111, 11 sind im gezeigten Beispiel beide als Kolben ausgeführt, insbesondere der erste Trennmittelabschnitt 11 kann aber auch als Membran ausgeführt werden. Der zweite Trennmittelabschnitt 111, insbesondere Kolben 111, ist gegenüber dem Gehäuse 13 in Richtung der Hauptachse beweglich gelagert. Dabei ist ein Dichtungsbereich 112 zwischen Kolben 111 und Gehäuse 13 bevorzugt so ausgeführt, dass dieser ein definiertes Losbrechmoment besitzt. In einer besonders bevorzugten Ausführungsform ist dieses Losbrechmoment einstellbar. Der Kolben 11 ist gegenüber dem Kolben 111 in Richtung der Hauptachse der Vorrichtung beweglich gelagert. Die Abdichtung 113 zwischen den beiden Kolben 111 und 11 ist bevorzugt so ausgeführt, dass diese eine möglichst geringe Reibung aufweist. Die Schwingungsreduktionseinheit 12 bzw. einstellbare Steifigkeit 12 stützt den Kolben 11 gegenüber dem Kolben 111 mittels der Verbindung 212 ab. Das Volumen 14 ist gasdicht ausgeführt und mit einem Druck beaufschlagt. Hierdurch fungiert dieses Volumen als Luftfeder. Verändert sich nun der statische Druckanteil im Fluid 2 und somit das Fluidvolumen 10 verschiebt sich der gesamte Aufbau aus den beiden Kolben 11 und 111 sowie der einstellbaren Steifigkeit 12 gegenüber dem Gehäuse 13. Das Losbrechmoment zwischen dem Kolben 111 und dem Gehäuse 13 bestimmt, ab welcher Druckdifferenz zwischen den Volumina 10 und 14 sich der Aufbau verschiebt. Hierdurch wird die einstellbare Steifigkeit 12 nicht durch statische Druckanteile ausgelenkt, sondern nur durch die dynamischen Druckschwankungen.

Wie Fig. 10 zeigt, ist bei der erfindungsgemäßen Vorrichtung eine bauliche Trennung zwischen dem Fluid 2 und dem Fluidvolumen 10 nicht zwingend notwendig. Bei Helmholtz-Resonatoren nach dem Stand der Technik ist ein sogenannter Hals hingegen notwendig, um eine schwingende Masse des Resonators zur Verfügung zu stellen. Demgegenüber kann diese Masse bei der vorgeschlagenen Vorrichtung 1 auch durch die Masse des Trennmittels 11 zur Verfügung gestellt werden. Wie oben bereits erläutert ist, eignet sich die gezeigte Ausführung für den automatisierten Ausgleich von statischen Druckanteilen.

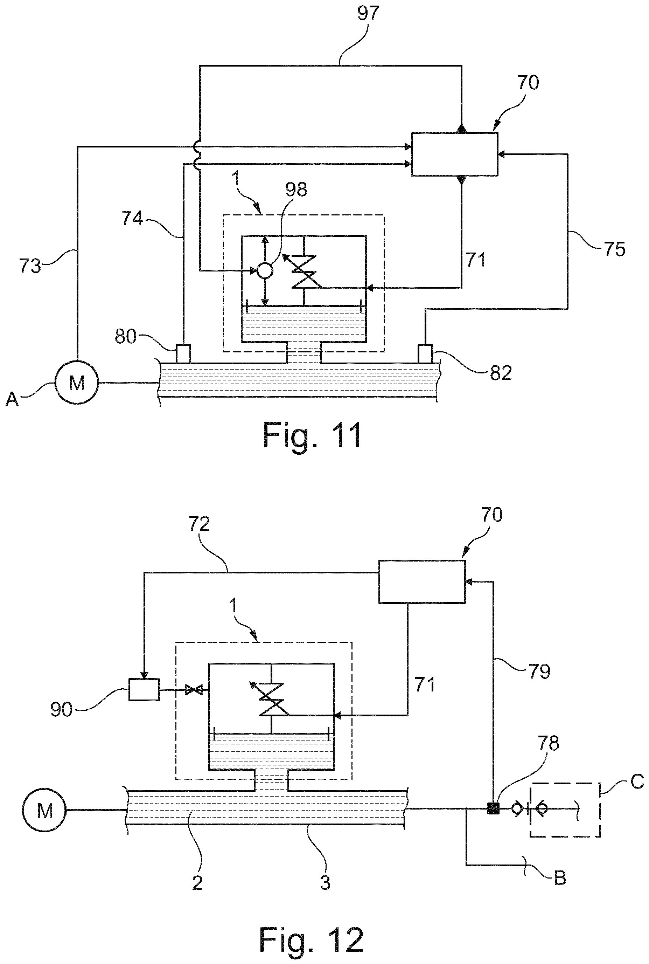

Figur 11 zeigt eine schematische Darstellung eines hydraulischen Systems mit einer erfindungsgemäßen Vorrichtung 1 und einem Regelungs- bzw. Steuerungssystem zum Betrieb der Vorrichtung. Eine Steuereinheit 70 wird verwendet, um die Abstimmfrequenz der Vorrichtung 1 einzustellen. Hierzu gibt die Steuereinheit 70 ein geeignetes Signal 71 an eine Verstellaktorik, welche in der Vorrichtung 1 integriert ist (vgl. z.B. Stellmotor 42 in Fig. 8), um deren Abstimmfrequenz anzupassen. Die Abstimmfrequenz der Vorrichtung 1 kann beispielsweise durch die Steuereinheit 70 Regelungs- oder Steuerungseinrichtung erzeugt werden basierend auf einem Drehzahlsignal 73 (oder einem Teil oder einem Vielfachen davon), das von einer Pumpe A ausgegeben oder an dieser gemessen wird. Die Abstimmfrequenz der Vorrichtung 1 kann beispielsweise auch durch die Steuereinheit 70 Regelungs- oder Steuerungseinrichtung erzeugt werden basierend auf einem Beschleunigungs- oder Druckwert 74, der an der Leitung 3 bzw. am Schlauch durch einen geeigneten Beschleunigungs- oder Drucksensor 80 gemessen wird. Das Signal 74 kann in der Steuereinheit 70 bspw. durch eine FFT (schnelle Fouriertransformation) in den Frequenzraum überführt werden. Die Abstimmfrequenz der Vorrichtung 1 kann durch die Steuereinheit 70 basierend auf diesem Frequenzsignal gewählt werden. Die Abstimmfrequenz der Vorrichtung 1 kann beispielsweise auch durch die Steuereinheit 70 Regelungs- oder Steuerungseinrichtung erzeugt werden basierend auf zwei Beschleunigungs- oder Druckwerten 74, 75, die durch geeignete Sensoren 80, 82 aufgenommen werden und in der Steuereinheit 70 in den Frequenzraum überführt werden. Die Abstimmfrequenz 71 wird hierbei beispielsweise so eingestellt, dass die Übertragung der zu reduzierenden und unvorteilhaften Frequenzanteile zwischen 80 und 82 bestmöglich reduziert wird.

Des Weiteren ist die Integration einer wie oben beschriebenen Aktorik 98 (beispielsweise ein Tauchspulenaktor oder Piezoaktor) bei allen Ausführungsbeispielen möglich. Die Aktorik kann sich zwischen dem Trennmittel 11 und dem Gehäuse 13 abstützen. Zusätzlich oder alternativ kann sich die Aktorik zwischen einem ersten Trennmittelabschnitt 11 und einem zweiten Trennmittelabschnitt 111 abstützen, siehe Fig. 10. Die Aktorik wirkt in Bewegungsrichtung des Trennmittels 11. Hierdurch können aktiv Kräfte in das Fluid eingebracht werden. Ist die Aktorik 98 zum aktiven Einbringen von Kräften in das Fluid vorgesehen, so kann diese zusätzlich genutzt werden, um Schwingungen im Fluid zu reduzieren. Diese Aktorik kann von der Steuereinheit 70 mit einer geeigneten Leistungselektronik angesteuert werden. Das Ansteuersignal 97 kann berechnet werden basierend auf einer Transformation der Beschleunigungs- und Druckwerte 74 durch ein Trägerfrequenzverfahren mit Quadraturmischung. Hierbei entspricht die Trägerfrequenz einer Ordnung des Drehzahlsignals. Die Abstimmfrequenz kann dann durch einen Vergleich der Phasenlage zwischen den dynamischen Druckverläufen an der Leitung 3 und der Phasenlage der Membranauslenkung ermittelt werden. Eine Ansteuerung der Aktorik 98 kann ferner über eine in der Steuereinheit 70 implementierte Regeleinrichtung erfolgen. Bei periodischer Druckanregung bspw. durch mehrere Harmonische der Drehzahl kann eine Ansteuerung der Aktorik ebenfalls über eine adaptive Gegensteuerung (z.B. FxLMS) erfolgen. Hierbei können die Sensoren 80, 82 optional zur Implementierung eines Wellentrennungsverfahrens genutzt werden, das die Unterscheidung wischen hin- und rücklaufender Wellenfront in der Leitung 3 bzw. im Schlauch ermöglicht. Eine Ansteuerung der Aktorik 98 ist ebenfalls mittels einer Zustands- oder Ausgangsrückführung möglich, wobei sich das gekoppelte dynamische Verhalten des Leitungs-/Schlauchsystems mit der Vorrichtung 1 regelungstechnisch einstellen lässt. Figur 12 zeigt eine schematische Darstellung eines hydraulischen Systems mit der vorgeschlagenen Vorrichtung 1 wobei die Möglichkeit besteht, eine weitere hydraulische Komponente C an das Fluidsystem anzukoppeln. Die Vorrichtung 1 ist in einem (nicht vollständig dargestellten) hydraulischen System angeordnet, das eine Pumpe A und weitere Komponenten B enthält. Darüber hinaus enthält das System wenigstens eine Kupplung oder einen Anschluss, welche(r) es ermöglicht, die weitere hydraulische Komponente C oder weitere hydraulische Systeme anzuschließen. Durch das Anschließen der weiteren Komponente C bzw. des weiteren Systems verändern sich die dynamischen Eigenschaften des gesamten hydraulischen Systems. Das hydraulische System beinhaltet einen Kopplungssensor 78, der den Anschluss der weiteren Komponente C erkennt und diese Information 79 an die Steuereinheit 70 weitergibt. Diese kann darauf basierend Stellsignale 71, 72 an die Vorrichtung 1 geben, um deren Abstimmfrequenz zu ändern und/oder - bspw. mit einer Pumpe 90 - den Druck im Volumen 14 anzupassen. Hierdurch wird es möglich, das hydraulische System zu verstimmen und ungünstige Kombinationen aus Eigenfrequenzen zu vermeiden, welche entstehen können, wenn man ein hydraulisches System mit einem weiteren hydraulischen System C koppelt. Dies kann beispielsweise passieren, wenn man Arbeitsgeräte an landwirtschaftliche Maschinen wie Traktoren ankoppelt.

## Patentansprüche

1. Vorrichtung (1) zur Beeinflussung, insbesondere Reduktion, von Schwingungen in einem Fluidsystem, insbesondere hydraulischen System, umfassend ein Trennmittel (11), das eine Seite zum Begrenzen einer fluidführenden Kavität (10) des Fluidsystems aufweist, aufweisend eine Schwingungsbeeinflussungseinheit (12), die eingerichtet ist, eine Steifigkeit des Trennmittels (11) mechanisch derart einzustellen, dass Schwingungen in dem Fluidsystem beeinflusst, insbesondere reduziert, werden, **dadurch gekennzeichnet, dass** die Schwingungsbeeinflussungseinheit (12) eingerichtet ist, die Steifigkeit des Trennmittels (11) durch eine Rotationsbewegung einzustellen.

2. Vorrichtung (1) nach Anspruch 1, **dadurch gekennzeichnet, dass** die Schwingungsbeeinflussungseinheit (12) ein Festkörper-Federelement umfasst.

3. Vorrichtung (1) nach einem der Ansprüche 1 oder 2, **dadurch gekennzeichnet, dass** das Trennmittel (11) translatorisch beweglich gelagert ist.

4. Vorrichtung (1) nach Anspruch 3, **gekennzeichnet durch** eine Feder (30), die derart auf eine von der fluidführenden Kavität (10) abgewandte und/oder der fluidführenden Kavität zugewandte Seite des Trennmittels (11) drückt, dass ein statischer Druck in der fluidführenden Kavität (10) durch Verformen der Feder (30) und Verschieben des Trennmittels (11) ausgeglichen wird.

5. Vorrichtung (1) nach einem der Ansprüche 1 bis 4, **dadurch gekennzeichnet, dass** das Trennmittel (11) die fluidführende Kavität (10) von einer zweiten Kavität (14) trennt, wobei insbesondere ein statischer Druck in der fluidführenden Kavität (10) durch Einstellen eines Gasdrucks in der zweiten Kavität (14) ausgeglichen wird.

6. Vorrichtung (1) nach Anspruch 5, **gekennzeichnet durch** ein zweites Trennmittel (16), das translatorisch verschiebbar ist und die zweite Kavität (14) von einer dritten Kavität (15) trennt, wobei die dritte Kavität (15) in fluider Verbindung mit der fluidführenden Kavität (10) steht.

7. Vorrichtung (1) nach einem der Ansprüche 1 bis 6, **dadurch gekennzeichnet, dass** die Vorrichtung (1) geeignet ist zur Beeinflussung, insbesondere Reduktion, von Schwingungen in dem Fluidsystem, bei dem die fluidführende Kavität (10) eine Leitung des Fluidsystems, insbesondere konzentrisch, umschließt.

8. Vorrichtung (1) nach einem der Ansprüche 1 bis 7, **dadurch gekennzeichnet, dass** die Schwingungsbeeinflussungseinheit (12) einen Federring (121) und einen gegenüber dem Federring (121) drehbar gelagerten Anbindungshalter (124) aufweist, wobei der Federring (121) über ortsfest mit dem Federring (121) verbundene Anbindungen (122) mit dem Trennmittel (11) in Berührung steht und wobei der Anbindungshalter (124) über ortsfest mit dem Anbindungshalter (124) verbundene Anbindungen (123) mit dem Federring (121) in Berührung steht.

9. Vorrichtung (1) nach Anspruch 8, **gekennzeichnet durch** ein Gehäuse (13), wobei der Anbindungshalter (124) gegenüber dem Gehäuse (13) drehbar ist, und **gekennzeichnet durch** einen Motor (42), der eingerichtet ist, eine Drehung des Anbindungshalters (124) gegenüber dem Gehäuse (13) zu bewirken.

10. Vorrichtung (1) nach einem der Ansprüche 1 bis 9, **dadurch gekennzeichnet, dass** das Trennmittel (11) einen translatorisch verschiebbaren ersten Trennmittelabschnitt (11) und einen translatorisch verschiebbaren zweiten Trennmittelabschnitt (111) aufweist, wobei der zweite Trennmittelabschnitt (111) gegenüber dem ersten Trennmittelabschnitt (11) translatorisch verschiebbar ist und wobei eine Abdichtung (113) zwischen dem ersten und zweiten Trennmittelabschnitt (11, 111) ausgebildet ist, wobei die Schwingungsbeeinflussungseinheit (12) mit dem ersten Trennmittelabschnitt (11) und dem zweiten Trennmittelabschnitt (111) derart verbunden ist, dass die Schwingungsbeeinflussungseinheit (12) zwischen dem ersten Trennmittelabschnitt (11) und dem zweiten Trennmittelabschnitt (111) wirkt und mit dem ersten Trennmittelabschnitt (11) und dem zweiten Trennmittelabschnitt (111) translatorisch verschiebbar ist, wobei insbesondere ein Dichtungsbereich (112) zwischen Trennmittel und Gehäuse ein insbesondere erhöhtes, beispielsweise einstellbares, Losbrechmoment aufweist.

11. Vorrichtung (1) nach einem der Ansprüche 1 bis 10, **gekennzeichnet durch** eine mit dem Trennmittel (11) verbundene Aktorik (98), die eingerichtet ist, ein Schwingen des Trennmittels (11) zu bewirken.

12. Vorrichtung (1) nach einem der Ansprüche 1 bis 11, weiterhin umfassend eine Steuereinheit (70), die zum Einstellen der Steifigkeit derart mit der Schwingungsbeeinflussungseinheit (12) verbunden ist, dass die Steifigkeit durch die Steuereinheit (70) einstellbar ist, wobei die Steuereinheit (70) eingerichtet ist, die Steifigkeit anhand von Beschleunigungssensorsignalen und/oder Drucksensorsignalen und/oder einer Pumpendrehzahl einzustellen.

13. Vorrichtung (1) nach einem der Ansprüche 1 bis 12, **gekennzeichnet durch** einen Kopplungssensor (78), der eingerichtet ist, eine Ankopplung einer weiteren Komponente (C) an das Fluidsystem zu detektieren, wobei eine Steuereinrichtung (70) vorgesehen und eingerichtet ist, die Steifigkeit anhand eines Signals des Kopplungssensors (78) einzustellen.

14. Verfahren zur Beeinflussung, insbesondere Reduktion, von Schwingungen in einem Fluidsystem, insbesondere hydraulischen System, umfassend:
- Bereitstellen einer Vorrichtung (1) nach einem der vorhergehenden Ansprüche und
- Einstellen der Steifigkeit des Trennmittels (11) durch die Schwingungsbeeinflussungseinheit (12), derart dass Schwingungen in dem Fluidsystem reduziert werden.

15. Verfahren nach Anspruch 14, **dadurch gekennzeichnet, dass** die Vorrichtung (1) eine Vorrichtung nach Anspruch 13 ist, wobei das Einstellen der Steifigkeit des Trennmittels (11) anhand des Signals des Kopplungssensors (78) durchgeführt wird.

## Claims

1. A device (1) for influencing, in particular reducing, vibrations in a fluid system, in particular a hydraulic system, comprising a separating means (11) which has a side for delimiting a fluid-conducting cavity (10) of the fluid system, comprising a vibration-influencing unit (12), which is designed to mechanically adjust the rigidity of the separating means (11) such that vibrations in the fluid system are influenced, in particular reduced, **characterized in that** the vibration-influencing unit (12) is designed to adjust the rigidity of the separating means (11) by means of a rotational movement.

2. The device (1) according to claim 1, **characterized in that** the vibration-influencing unit (12) comprises a solid-body spring element.

3. The device (1) according to any of claims 1 or 2, **characterized in that** the separating means (11) is mounted so as to be translationally movable.

4. The device (1) according to claim 3, **characterized by** a spring (30), which presses on a side of the separating means (11) facing away from the fluid-conducting cavity (10) and/or facing the fluid-conducting cavity such that a static pressure in the fluid-conducting cavity (10) is compensated for by deforming the spring (30) and displacing the separating means (11).

5. The device (1) according to any of claims 1 to 4, **characterized in that** the separating means (11) separates the fluid-conducting cavity (10) from a second cavity (14), wherein, in particular, a static pressure in the fluid-conducting cavity (10) is compensated for by adjusting the gas pressure in the second cavity (14).

6. The device (1) according to claim 5, **characterized by** a second separating means (16), which is translationally displaceable and separates the second cavity (14) from a third cavity (15), the third cavity (15) being in a fluid connection to the fluid-conducting cavity (10).

7. The device (1) according to any of claims 1 to 6, **characterized in that** the device (1) is suitable for influencing, in particular reducing, vibrations in a fluid system, in which the fluid-conducting cavity (10) surrounds a line of the fluid system, in particular concentrically.

8. The device (1) according to any of claims 1 to 7, **characterized in that** the vibration-influencing unit (12) comprises a spring washer (121) and a connector retainer (124) mounted so as to be rotatable relative to the spring washer (121), the spring washer (121) being in contact with the separating means (11) via connectors (122) connected to the spring washer (121) in a stationary manner and the connector retainer (124) being in contact with the spring washer (121) via connectors (123) connected to the connector retainer (124) in a stationary manner.

9. The device (1) according to claim 8, **characterized by** a housing (13), the connector retainer (124) being rotatable relative to the housing (13), and **characterized by** a motor (42), which is designed to bring about a rotation of the connector retainer (124) relative to the housing (13).

10. The device (1) according to any of claims 1 to 9, **characterized in that** the separating means (11) comprises a translationally displaceable first separating means portion (11) and a translationally displaceable second separating means portion (111), the second separating means portion (111) being translationally displaceable relative to the first separating means portion (11) and a seal (113) being formed between the first and the second separating means portion (11, 111), the vibration-influencing unit (12) being connected to the first separating means portion (11) and the second separating means portion (111) such that the vibration-influencing unit (12) takes effect between the first separating means portion (11) and the second separating means portion (111) and is translationally displaceable together with the first separating means portion (11) and the second separating means portion (111), a sealing region (112) between the separating means and the housing in particular having an in particular increased, for example adjustable, breakaway torque.

11. The device (1) according to any of claims 1 to 10, **characterized by** an actuator system (98) which is connected to the separating means (11) and is designed to bring about vibration of the separating means (11).

12. The device (1) according to any of claims 1 to 11, further comprising a control unit (70), which is connected to the vibration-influencing unit (12) for adjusting the rigidity such that the rigidity can be adjusted by the control unit (70), the control unit (70) being designed to adjust the rigidity on the basis of acceleration sensor signals and/or pressure sensor signals and/or a pump speed.

13. The device (1) according to any of claims 1 to 12, **characterized by** a coupling sensor (78), which is designed to detect a further component (C) being coupled to the fluid system, a control apparatus (70) being provided and designed to adjust the rigidity on the basis of a signal from the coupling sensor (78).

14. A method for influencing, in particular reducing, vibrations in a fluid system, in particular a hydraulic system, comprising:
- providing a device (1) according to any of the preceding claims, and
- adjusting the rigidity of the separating means (11) by means of the vibration-influencing unit (12) such that vibrations in the fluid system are reduced.

15. The method according to claim 14, **characterized in that** the device (1) is a device according to claim 13, in which the rigidity of the separating means (11) is adjusted on the basis of the signal from the coupling sensor (78).

## Revendications

1. Dispositif (1) permettant d'altérer, en particulier de réduire, des vibrations au sein d'un système fluidique, en particulier d'un système hydraulique, comprenant un moyen de séparation (11) qui présente un côté permettant de délimiter une cavité d'acheminement de fluide (10) du système fluidique, présentant une unité d'altération des vibrations (12) conçue pour ajuster mécaniquement une rigidité du moyen de séparation (11) de telle manière que des vibrations au sein du système fluidique sont altérées, en particulier réduites, **caractérisé en ce que** l'unité d'altération des vibrations (12) est conçue pour ajuster la rigidité du moyen de séparation (11) par un mouvement de rotation.

2. Dispositif (1) selon la revendication 1, **caractérisé en ce que** l'unité d'altération des vibrations (12) comprend un élément solide formant ressort.

3. Dispositif (1) selon l'une quelconque des revendications 1 ou 2, **caractérisé en ce que** le moyen de séparation (11) est monté de manière à se déplacer par translation.

4. Dispositif (1) selon la revendication 3, **caractérisé par** un ressort (30) qui appuie sur un côté du moyen de séparation (11) qui est opposé à la cavité d'acheminement de fluide (10) et/ou qui est tourné vers la cavité d'acheminement de fluide de telle manière qu'une pression statique au sein de la cavité d'acheminement de fluide (10) est compensée par une déformation du ressort (30) et un déplacement du moyen de séparation (11).

5. Dispositif (1) selon l'une quelconque des revendications 1 à 4, **caractérisé en ce que** le moyen de séparation (11) sépare la cavité d'acheminement de fluide (10) d'une deuxième cavité (14), une pression statique au sein de la cavité d'acheminement de fluide (10) étant en particulier compensée grâce à l'ajustement d'une pression de gaz au sein de la deuxième cavité (14).

6. Dispositif (1) selon la revendication 5, **caractérisé par** un deuxième moyen de séparation (16) qui peut être déplacé par translation et qui sépare la deuxième cavité (14) d'une troisième cavité (15), la troisième cavité (15) étant en communication fluidique avec la cavité d'acheminement de fluide (10).

7. Dispositif (1) selon l'une quelconque des revendications 1 à 6, **caractérisé en ce que** le dispositif (1) convient pour altérer, en particulier réduire, les vibrations au sein du système fluidique dans lequel la cavité d'acheminement de fluide (10) encercle une conduite du système fluidique, en particulier de manière concentrique.

8. Dispositif (1) selon l'une quelconque des revendications 1 à 7, **caractérisé en ce que** l'unité d'altération des vibrations (12) présente une rondelle ressort (121) et un support de connexion (124) monté rotatif par rapport à la rondelle ressort (121), la rondelle ressort (121) étant en contact avec le moyen de séparation (11) par l'intermédiaire de connexions (122) reliées de manière fixe à la rondelle ressort (121) et le support de connexion (124) étant en contact avec la rondelle ressort (121) par l'intermédiaire de connexions (123) reliées de manière fixe au support de connexion (124).

9. Dispositif (1) selon la revendication 8, **caractérisé par** un boîtier (13), le support de connexion (124) pouvant tourner par rapport au boîtier (13), et **caractérisé par** un moteur (42) conçu pour provoquer une rotation du support de connexion (124) par rapport au boîtier (13).

10. Dispositif (1) selon l'une quelconque des revendications 1 à 9, **caractérisé en ce que** le moyen de séparation (11) présente une première section de moyen de séparation (11) pouvant être déplacée par translation et une seconde section de moyen de séparation (111) pouvant être déplacée par translation, la seconde section de moyen de séparation (111) pouvant être déplacée par translation par rapport à la première section de moyen de séparation (11), et un dispositif d'étanchéité (113) étant formé entre les première et seconde sections de moyen de séparation (11, 111), l'unité d'altération des vibrations (12) étant reliée à la première section de moyen de séparation (11) et à la seconde section de moyen de séparation (111) de telle manière que l'unité d'altération des vibrations (12) agit entre la première section de moyen de séparation (11) et la seconde section de moyen de séparation (111) et peut être déplacée par translation avec la première section de moyen de séparation (11) et avec la deuxième section de moyen de séparation (111), une région d'étanchéité (112) située entre le moyen de séparation et le boîtier présentant en particulier un couple de décollage, en particulier augmenté, par exemple ajustable.

11. Dispositif (1) selon l'une quelconque des revendications 1 à 10, **caractérisé par** un actionneur (98) relié au moyen de séparation (11) et conçu pour provoquer une oscillation du moyen de séparation (11).

12. Dispositif (1) selon l'une quelconque des revendications 1 à 11, comprenant en outre une unité de commande (70) qui, afin d'ajuster la rigidité, est reliée à l'unité d'altération des vibrations (12) de telle manière que la rigidité peut être ajustée par l'unité de commande. (70), l'unité de commande (70) étant conçue pour ajuster la rigidité en fonction des signaux de capteur d'accélération et/ou des signaux de capteur de pression et/ou d'une vitesse de rotation de pompe.

13. Dispositif (1) selon l'une quelconque des revendications 1 à 12, **caractérisé par** un capteur de couplage (78) conçu pour détecter un couplage d'un composant (C) supplémentaire au niveau du système fluidique, un dispositif de commande (70) étant conçu et fourni afin d'ajuster la rigidité en fonction d'un signal du capteur de couplage (78).

14. Procédé permettant d'altérer, en particulier de réduire, des vibrations au sein d'un système fluidique, en particulier d'un système hydraulique, comprenant les étapes consistant à :
- fournir un dispositif (1) selon l'une quelconque des revendications précédentes et
- ajuster la rigidité du moyen de séparation (11) par l'unité d'altération des vibrations (12) de telle manière que les vibrations sont réduites au sein du système fluidique.

15. Procédé selon la revendication 14, **caractérisé en ce que** le dispositif (1) est un dispositif selon la revendication 13, l'ajustement de la rigidité du moyen de séparation (11) étant mis en œuvre en fonction du signal du capteur de couplage (78).
